# EUROPEAN PATENT SPECIFICATION

(11) **EP 1 674 660 B1**
(45) Date of publication and mention of the grant of the patent: **15.06.2011**
(21) Application number: 05256498.6
(22) Date of filing: 20.10.2005
(51) Int. Cl.: F01D 5/18, F02C 7/18

(54) **Impingement cooled turbine components with dirt separation**
Turbinenkomponente mit Aufprallkühlung und Schmutztrennung
Composants de turbine refroidis par courant d'air ayant un séparateur de saletés

(30) Priority: 21.12.2004 US 18629
(43) Date of publication of application: 28.06.2006
(73) Proprietor: United Technologies Corporation, Hartford, CT 06101 (US)
(72) Inventor: Paauwe, Corneil, Manchester, CT 06040 (US); Bridges, Joseph, Durham, CT 06422 (US); Devore, Matthew, Portland, CT 06422 (US)
(74) Representative: Leckey, David Herbert

(56) References cited:
- EP-A- 1 219 784
- EP-A- 1 284 338
- GB-A- 2 386 926
- US-A- 4 798 515

## Description

### BACKGROUND OF THE INVENTION

This invention relates to an impingement tube received within a turbine component, and in which the impingement tube has an inner and outer portion, with the outer portion being configured to minimize dirt blockage of impingement air at the leading edge. In one embodiment, the inner and outer portions are formed as separate pieces, and in another embodiment, the inner and outer portions are formed as a single piece.

Turbine engines have a number of components. One type of component is a stationary vane. The vanes are in the path of hot air downstream of a combustor, and have a leading edge that faces the hot air. The vane is thus exposed to high temperatures and requires cooling. One method utilized to cool the vane, is to form the vane to have hollow areas, and place impingement tubes within the hollow areas. The impingement tubes have a number of holes for directing impingement air outwardly to points within the vane. Holes also extend through the wall of the vane in order to direct the impingement air onto an outer surface of the vane.

This application relates to an impingement tube used within the hollow area of the vane that receives cooling air from both inner and outer vane cooling air supplies. One known way of supplying impingement cooling air from both inner and outer supplies is to use an impingement tube which includes an outer portion and an inner portion. Each of the inner and outer portions have an end wall roughly at an intermediate position within the vane, and with end walls both being generally parallel to an axis of rotation for the turbine. Outer cooling air is brought within the outer portion and inner cooling air is brought within the inner portion. The holes within the impingement tube portions and the vane are concentrated adjacent the leading edge of the vane.

It has been found that the air from a radially outer source carries more dirt than air from a radially inner source. The holes in the impingement tube and vane are relatively small, and are sometimes clogged by dirt within the impingement airflow. When this dirt clogs the holes near the leading edge, less air than may be desirable is directed to the leading edge.

US-A-4798515 discloses a turbine component having the features of the preamble of claim 1.

### SUMMARY OF THE INVENTION

According to the present invention, there is provided a turbine component as set forth in claim 1.

In a disclosed embodiment of this invention, a vane receives an impingement tube including an inner and an outer portion. An end wall within the outer portion is positioned such that the outer portion covers less of a leading edge of the vane than it covers at the aft end spaced towards the trailing edge. The end wall of the outer portion is generally planar, and angled radially inwardly from the leading edge moving toward trailing edge. In this manner, the outer portion has more surface area adjacent the aft end than it does at the leading edge. Thus, the dirtier outer impingement air flows in greater volumes to the aft end than it does to the leading edge.

The inner portion is formed in an opposite manner, with its end wall also moving radially inwardly from the leading edge toward the trailing edge. However, with the inner portion, the effect of this angled end wall is to increase the volume of air directed from the inner impingement air source to the leading edge relative to the volume of air directed to the aft end.

Not only does this shape reduce the volume of outer impingement airflow being directed to the leading edge relative to the aft end, but there are also mechanical means and resultant flow dynamics that reduce the amount of dirt reaching the leading edge of the vane. In particular, when air from the outer impingement air source enters the outer portion, there is momentum which causes dirt to be directed along the angled end wall away from the leading edge and toward the aft end of the outer impingement tube. With the prior art construction, dirt was not directed toward the aft end and was as likely to initially reside at the leading edge as it was the aft end. Also, with the prior art construction, dirt initially at the aft end can migrate back toward the leading edge. However, with the present invention, the angled end wall "pins" the dirt at the aft end. This is due to a pressure loading from the wedge shape. Purge holes at the bottom of the wedge, in conjunction with the suppressed static pressure inherent to the decrease in area heading toward the aft edge, create an increased dynamic pressure load that resists movement of the dirt from the aft end toward the leading edge in the outer portion. Also, the angled end wall creates a wedge shape which acts as a mechanical means of trapping the dirt. The angled end wall first directs dirt to the aft end of the outer impingement tube where once there its is pinned both mechanically and from the resulting flow dynamics from movement toward the leading edge.

The dirt thus tends to become trapped or to exit the outer portion adjacent the aft end. The dirt that exits the outer portion adjacent the trailing edge may then leave the vane altogether through film holes in the outer surface of the vane adjacent the aft end. In essence, the wedge shape creates a trap that either captures dirt permanently or allows the dirt to exit the vane adjacent the aft end where it is least likely of plugging the leading edge of the vane.

In a first embodiment, the inner and outer portions are formed as separate pieces. In a second embodiment, the inner and outer portions are formed as a single piece.

The present invention thus reduces the likelihood of the dirt within the outer airflow from reducing the impingement airflow to the leading edge of the vane.

These and other features of the present invention can be best understood from the following specification and drawings, the following of which is a brief description.

### BRIEF DESCRIPTION OF THE DRAWINGS

Figure 1 is a view of a portion of a turbine engine.
Figure 2A shows a vane incorporating the present invention.
Figure 2B is a cross-sectional view through a portion of a vane.
Figure 3 is a perspective view of an inventive impingement tube set.
Figure 4 shows a second embodiment impingement tube.

### DETAILED DESCRIPTION OF THE PREFERRED EMBODIMENT

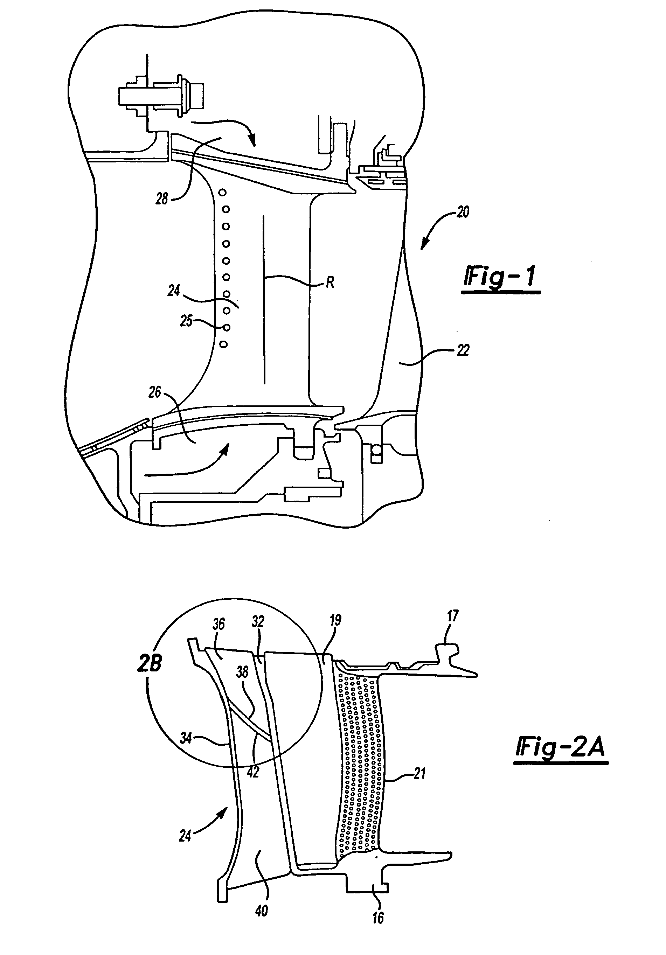

A gas turbine engine 20 is illustrated in Figure 1. As is known, rotor blades 22 rotate about a central axis, and receive air from an upstream combustor. A plurality of stationary vanes 24 are positioned adjacent the rotor blades 22. As is known, the vanes 24 are exposed to very hot air, and thus cooling air is directed into the vanes 24. As shown, there is a radially inner source 26 for cooling air and a radially outer source 28 for cooling air. The air exits the vanes 24 such as through film cooling holes 25 found at the leading edge. Other holes are found across the vane, but are not illustrated for simplicity. It has been determined that the radially outer source 28 directs air that carries more dirt into the vane 24 compared to the radially inner source 26. A radial line R, which will be used as a reference below, could be described which is generally perpendicular to the rotational axis of the rotor blades 22.

Figure 2A shows vane 24, having a leading edge 34, a rib 32 spaced toward a trailing edge 21, as well as inner and outer platforms 16 and 17, respectively. As shown, a hollow area 19 will receive one impingement tube, and another impingement tube is received in another hollow area and includes an outer portion 36 and an inner portion 40 adjacent the leading edge 34. As shown, the outer portion 36 has an end 38 and the inner portion 40 has an end 42.

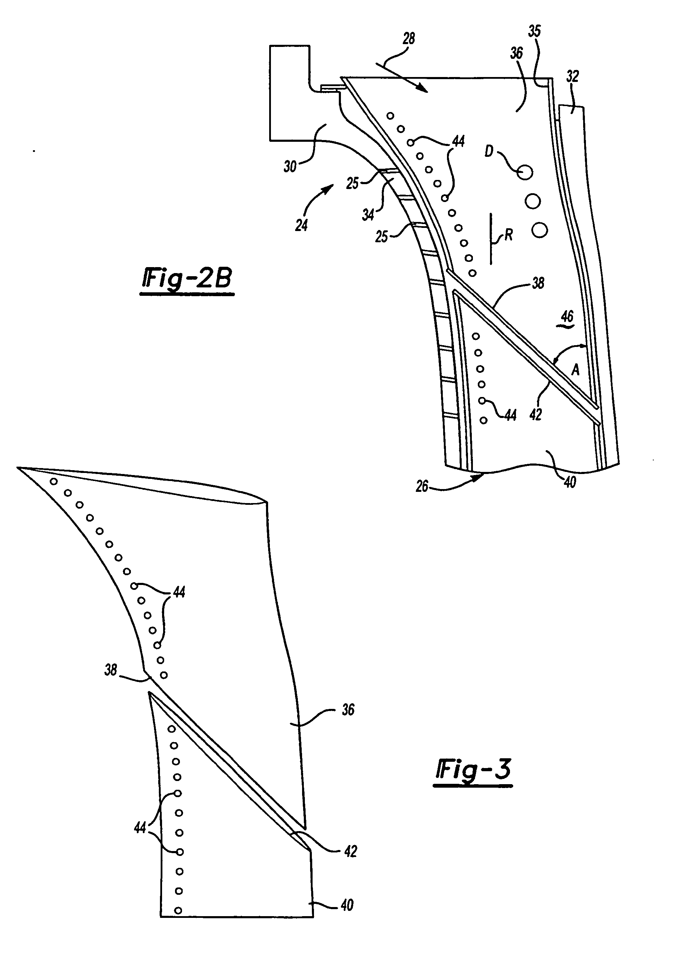

As shown in Figure 2B, vane 24 includes an outer wall 30 at a leading edge 34. As known, the leading edge 34 is exposed to the hottest temperatures, as it directly faces into the flow downstream of the combustor.

The cooling air from the outer air source 28 is directed into the outer impingement tube portion 36 having an end wall 38. The inner impingement tube portion 40 receives air from the inner air source 26, and has an end wall 42. As can be appreciated from Figures 2A and 2B, the end walls 38 and 42 are not perpendicular to the radius R, or stated otherwise, are not parallel to the rotational axis of the rotor blade 22. In the prior art, the end walls 38 and 42 have been parallel to the rotational axis of the rotor blade 22.

The impingement tube portions 36 and 40 include a number of impingement airflow holes 44. The holes 44 are found across the impingement air tube portions 36 and 40, however, they are only illustrated adjacent the leading edge 34 in this application. The impingement air tube portions have a greater concentration of holes 44 adjacent the leading edge, as it is desirable to direct the most cooling air to the leading edge. However, it should be understood that other holes would be found spaced away from the leading edge of the impingement tube portions 36 and 40. These holes are simply not illustrated in these figures for simplicity of illustration.

As mentioned above, dirt D is found to a greater extent in the outer airflow source 28 than in the inner airflow source 26. In the past, this dirt has plugged holes such as holes 44 and 25. This is especially detrimental at the leading edge 34.

Momentum from the outer airflow 28 will carry the heavier dirt particles D into the wedge 46 created between the aft end 35 and the end wall 38 and further away from the leading of the outer impingement tube holes 44 and leading edge holes 25. In the prior art, with the end wall being parallel to the rotational axis of the turbine, the dirt particles were not directed away from the leading edge or restrained from migrating back toward the leading edge and eventually plugging the holes 25 and 44 adjacent the leading edge 34.

The present invention addresses this concern in three ways. First, since the end wall 38 is angled from the leading edge inward toward the aft end 35, there is a dynamic pressure load on the dirt particles D resisting migration toward the leading edge. Second, due to the wedge shape created between aft end 35 and end wall 38 dirt will become trapped within the deep tight corner of the impingement tube or exit the aft end 35 instead of migrating toward the leading edge and plugging holes 25 and 44. Further, the simple geometry of the outer impingement tube portion 36 is such that there is less flow cross-sectional area adjacent the leading edge than there is adjacent the aft end edge. As can be appreciated from Figure 2, the opposite would be true of the radially inner impingement tube portion 40. Thus, the radially inner source 26 provides a greater volume of cooling air to the leading edge 34 than it does to the second end 35, while the radially outer source 28 supplies more impingement cooling air to the aft end 35 than it does the leading edge 34. These factors in combination, reduce the amount of dirt likely to reach the holes 25 and 44 in the leading edge of the vane 24 and the outer impingement tube portion 36.

An angle A measured between the end wall 38 and the aft end 35 of the outer impingement tube portion 36 is preferably between 20 and 60°. In one embodiment, the angle is 36°. It is important that the angle is small enough to collect the dirt, but not large enough to affect the cooling airflow through the impingement tube. The angle of the inner portion end 42 wall is parallel to end wall 38.

Thus, the problem discussed above is addressed. There is a greater reliability of impingement air being directed to the leading edge 34 of the vane 24.

Figure 3 shows further detail of the impingement tubes 36 and 40.

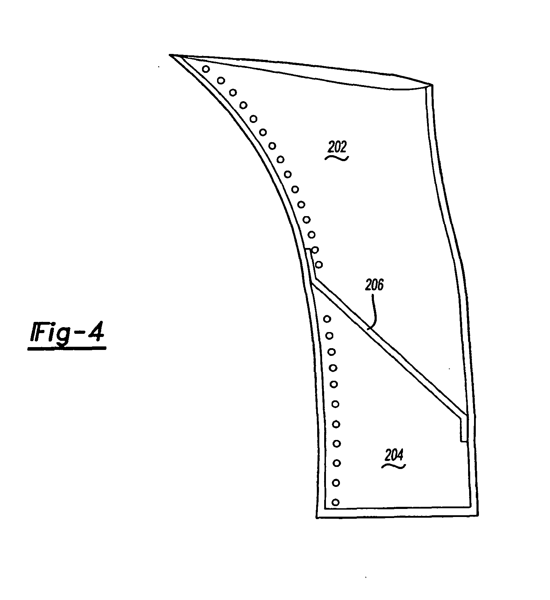

In the above embodiments, the inner and outer portions are formed as separate pieces. Figure 4 shows an embodiment wherein the outer portion 202 and inner portion 204 of an impingement tube are formed as a single piece. A single wall 206 provides the characteristics as mentioned above.

While the invention is disclosed in a vane, it would have potential application in other turbine components that receive both inner and outer cooling air flows. Examples may include burner liners, flame holders, turbine exhaust cases, etc.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A turbine component comprising:
a body having a leading edge (34) and a trailing edge (21), said body having a radially outer edge and a radially inner edge;
an impingement tube received within said body and including a radially outer portion (36) and a radially inner portion (40), with said radially inner portion (40) for receiving air from a radially inner source and said radially outer portion (36) for receiving air from a radially outer source, said radially inner and outer portions (40,36) having impingement air holes (44) for directing impingement air to a position adjacent said leading edge (34) of said body, **characterised in that**:
at least said radially outer portion (36) is configured to have less flow cross sectional area adjacent the leading edge (34) than it does adjacent the trailing edge (21) so as in use to direct a greater volume of impingement air to an aft end (35), spaced from said leading edge (34) and in a direction toward said trailing edge of said body, than is directed toward said leading edge (34);
**in that** both said radially outer and radially inner portions (36,40) have end walls (38,42); and **in that**
said end wall (38) of said radially outer portion (36) is planar and is angled from said leading edge (34) toward said aft end (35) in a radially inner direction such that said leading edge of said radially outer portion (36) is shorter than said aft end (35) of said radially outer portion (36), and such that said end wall (38) of said radially outer portion (36) defines a wedge shape between said end wall (3 8) and the aft end (35) of said radially outer portion (36).

2. The turbine component as set forth in claim 1, wherein said body is a vane airfoil (24).

3. The turbine component as set forth in claim 1 or 2, wherein said radially inner portion (40) directs a greater volume of impingement airflow toward said leading edge (34) of said vane (24) than it does toward said aft end (35).

4. The turbine component as set forth in any preceding claim, wherein said end wall of said radially inner portion is angled from said leading edge (34) toward said aft end (35) in a radially inner direction such that said leading edge of said radially inner portion (40) is longer than said aft end (35).

5. The turbine component as set forth in claim 4, wherein said end walls (38,42) of said radially outer portion (36) and said radially inner portion (40) are generally parallel to each other.

6. The turbine component as set forth in any preceding claim, wherein an angle (A) between said end wall (38) and said aft end (35) of said radially outer portion (36) is between 20° and 60°.

7. The turbine component as set forth in any preceding claim, wherein said radially outer portion (36) and said radially inner portion (40) are formed as two separate pieces.

8. The turbine component as set forth in any of claims 1 to 6, wherein said radially outer portion (202) and said radially inner portion (204) are formed as a single piece.

9. A gas turbine engine (20) comprising:
at least one rotor (22) for rotating about a central axis;
at least one vane (24), said vane being a turbine component as set forth in any preceding claim; and
an outer air source (28) for directing air from a radially outer location into said radially outer portion (36) of said impingement tube, and an inner air source (26) for directing air from a radially inner location into said radially inner portion (40) of said impingement tube.

10. A method of reducing dirt flow toward a leading edge (34) of a hollow airfoil, said airfoil being a component as set forth in any of claims 1 to 8, comprising the steps of directing a radially outer air source (28) into said radially outer impingement tube portion (36), and directing a radially inner air source (26) into said radially inner impingement tube portion (40).

## Patentansprüche

1. Turbinenkomponente umfassend:
einen Körper, der eine Vorderkante (34) und eine Hinterkante (21) aufweist, wobei der Körper eine radial äußere Kante und eine radial innere Kante aufweist;
ein Prallrohr, das innerhalb des Körpers aufgenommen ist und einen radial äußeren Bereich (36) zum Aufnehmen von Luft einer radial äußeren Quelle und einen radial inneren Bereich (40) zum Aufnehmen von Luft einer radial inneren Quelle beinhaltet, wobei der radial innere und der radial äußere Bereich (40, 36) Prallluftlöcher (44) aufweisen zum Leiten von Prallluft zu einer Position benachbart der Vorderkante (34) des Körpers, **dadurch gekennzeichnet, dass**:
zumindest der radial äußere Bereich (36) derart ausgebildet ist, dass er einen geringeren Strömungsquerschnittsbereich benachbart der Vorderkante (34) aufweist, als er benachbart der Hinterkante (21) aufweist, so dass, in Betrieb, ein größeres Volumen von Prallluft an ein hinteres, von der Vorderkante (34) und in einer Richtung hin zu der Hinterkante des Körpers beabstandetes Ende (35) geleitet wird, als es hin zu der Vorderkante (34) geleitet wird;
sowohl der radial äußere als auch der radial innere Bereich (36, 40) Endwände (38, 42) aufweisen; und
die Endwand (38) des radial äußeren Bereichs (36) eben ist und von der Vorderkante hin zu dem hinteren Ende (35) in eine radial innere Richtung angewinkelt ist, so dass die Vorderkante des radial äußeren Bereichs (36) kürzer ist als das hintere Ende (35) des radial äußeren Bereichs (36), und so, dass die Endwand (38) des radial äußeren Bereichs (36) eine Keilform zwischen der Endwand (38) und dem hinteren Ende (35) des radial äußeren Bereichs (36) definiert.

2. Turbinenkomponente nach Anspruch 1, wobei der Körper ein Leitschaufelströmungsprofil (24) ist.

3. Turbinenkomponente nach Anspruch 1 oder 2, wobei der radial innere Bereich (40) ein größeres Volumen von Prallluftströmung hin zu der Vorderkante (34) der Leitschaufel (24) leitet, als es hin zu dem hinteren Ende (35) leitet.

4. Turbinenkomponente nach einem der vorangehenden Ansprüche, wobei die Endwand des radial inneren Bereichs von der Vorderkante (34) hin zu dem hinteren Ende (35) in einer radial inneren Richtung angewinkelt ist, so dass die Vorderkante des radial inneren Bereichs (40) länger ist als das hintere Ende (35).

5. Turbinenkomponente nach Anspruch 4, wobei die Endwände (38, 42) des radial äußeren Bereichs (36) und des radial inneren Bereichs (40) im Wesentlichen parallel zueinander sind.

6. Turbinenkomponente nach einem der vorangehenden Ansprüche, wobei ein Winkel (A) zwischen der Endwand (38) und dem hinteren Ende (35) des radial äußeren Bereichs (36) zwischen 20° und 60° beträgt.

7. Turbinenkomponente nach einem der vorangehenden Ansprüche, wobei der radial äußere Bereich (36) und der radial innere Bereich (40) als zwei getrennte Teile ausgebildet sind.

8. Turbinenkomponente nach einem der Ansprüche 1 bis 6, wobei der radial äußere Bereich (202) und der radial innere Bereich (204) als ein einzelnes Teil ausgebildet sind.

9. Gasturbinenmaschine (20) umfassend:
zumindest einen Rotor (22) zur Rotation um eine Mittelachse;
zumindest eine Leitschaufel (24), wobei die Leitschaufel eine Turbinenkomponente nach einem der vorangehenden Ansprüche ist; und
eine äußere Luftquelle (28) zum Leiten von Luft von einem radial äußeren Ort in den radial äußeren Bereich (36) des Prallrohrs, und eine innere Luftquelle (26) zum Leiten von Luft von einem radial inneren Ort in den radial inneren Bereich (40) des Prallrohrs.

10. Verfahren zur Reduktion von Schmutzströmung hin zu einer Vorderkante (34) eines hohlen Strömungsprofils, wobei das Strömungsprofil eine Komponente nach einem der Ansprüche 1 bis 8 ist, umfassend die Schritte des Leitens einer radial äußeren Luftquelle (28) in den radial äußeren Prallrohrbereich (36), und des Leitens einer radial inneren Luftquelle (26) in den radial inneren Prallrohrbereich (40).

## Revendications

1. Composant de turbine comprenant :
un corps ayant un bord d'attaque (34) et un bord de fuite (21), ledit corps ayant un bord radialement externe et un bord radialement interne ;
un tube d'impact reçu dans ledit corps et comportant une portion radialement externe (36) et une portion radialement interne (40), ladite portion radialement interne (40) étant destinée à recevoir de l'air provenant d'une source radialement interne et ladite portion radialement externe (36) étant destinée à recevoir de l'air provenant d'une source radialement externe, lesdites portions radialement interne et externe (40, 36) ayant des trous d'air d'impact (44) pour orienter l'air d'impact vers une position adjacente audit bord d'attaque (34) dudit corps,
**caractérisé en ce que** :
au moins ladite portion radialement externe (36) est configurée de manière à avoir une zone d'écoulement en section transversale à côté du bord d'attaque (34) plus petite que celle à côté du bord de fuite (21), de manière à diriger, pendant l'utilisation, un volume d'air d'impact vers une extrémité arrière (35), à distance dudit bord d'attaque (34) et dans une direction vers ledit bord de fuite dans ledit corps, qui est supérieur au volume dirigé vers ledit bord d'attaque (34) ;
lesdites deux portions radialement externe et radialement interne (36, 40) ont des parois d'extrémité (38, 42) ; et **en ce que**
ladite paroi d'extrémité (38) de ladite portion radialement externe (36) est plane et est inclinée depuis ledit bord d'attaque (34) vers ladite extrémité arrière (35) dans une direction radialement interne de telle sorte que ledit bord d'attaque de ladite portion radialement externe (36) soit plus court que ladite extrémité arrière (35) de ladite portion radialement externe (36), et de telle sorte que ladite paroi d'extrémité (38) de ladite portion radialement externe (36) définisse une forme en coin entre ladite paroi d'extrémité (38) et l'extrémité arrière (35) de ladite portion radialement externe (36).

2. Composant de turbine selon la revendication 1, dans lequel ledit corps est un profilé d'ailette (24).

3. Composant de turbine selon la revendication 1 ou 2, dans lequel ladite portion radialement interne (40) dirige un volume de flux d'air d'impact vers ledit bord d'attaque (34) de ladite ailette (24) qui est supérieur au volume dirigé vers ladite extrémité arrière (35).

4. Composant de turbine selon l'une quelconque des revendications précédentes, dans lequel ladite paroi d'extrémité de ladite portion radialement interne est inclinée depuis ledit bord d'attaque (34) vers ladite extrémité arrière (35) dans une direction radialement interne de telle sorte que ledit bord d'attaque de ladite portion radialement interne (40) soit plus long que ladite extrémité arrière (35).

5. Composant de turbine selon la revendication 4, dans lequel lesdites parois d'extrémité (38, 42) de ladite portion radialement externe (36) et de ladite portion radialement interne (40) sont généralement parallèles l'une à l'autre.

6. Composant de turbine selon l'une quelconque des revendications précédentes, dans lequel un angle (A) entre ladite paroi d'extrémité (38) et ladite extrémité arrière (35) de ladite portion radialement externe (36) est compris entre 20° et 60°.

7. Composant de turbine selon l'une quelconque des revendications précédentes, dans lequel ladite portion radialement externe (36) et ladite portion radialement interne (40) sont formées en tant que deux pièces séparées.

8. Composant de turbine selon l'une quelconque des revendications 1 à 6, dans lequel ladite portion radialement externe (202) et ladite portion radialement interne (204) sont formées en tant que pièce unique.

9. Moteur de turbine à gaz (20), comprenant :
au moins un rotor (22) destiné à tourner autour d'un axe central ;
au moins une ailette (24), ladite ailette étant un composant de turbine selon l'une quelconque des revendications précédentes, et
une source d'air externe (28) destinée à diriger l'air depuis un emplacement radialement externe dans ladite portion radialement externe (36) dudit tube d'impact, et une source d'air interne (26) destinée à diriger l'air depuis un emplacement radialement interne dans ladite portion radialement interne (40) dudit tube d'impact.

10. Procédé destiné à réduire l'écoulement de saletés vers un bord d'attaque (34) d'un profilé creux, ledit profilé étant un composant selon l'une quelconque des revendications 1 à 8, comprenant les étapes consistant à diriger une source d'air radialement externe (28) dans ladite portion de tube d'impact radialement externe (36) et à diriger une source d'air radialement interne (26) dans ladite portion de tube d'impact radialement interne (40).
